# EUROPEAN PATENT APPLICATION

(11) **EP 2 003 609 A1**
(43) Date of publication of application: **17.12.2008**
(21) Application number: 08158036.7
(22) Date of filing: 11.06.2008
(51) Int. Cl.: G06Q 30/00

(54) **Information processing apparatus and method and program**

(30) Priority: 14.06.2007 JP 2007156972
(71) Applicant: Sony Corporation, Tokyo (JP)
(72) Inventor: Nagasaka, Hideo c/o Sony Corporation, Tokyo (JP); Tokashiki, Mamoru c/o Sony Corporation, TOKYO (JP)
(74) Representative: Thévenet, Jean-Bruno

(57) **Abstract**

Disclosed herein is an information processing apparatus including a taker (56, 72) for taking registration count information associated with the number of pieces of registration information including identification information for identifying a tag included in the tag specified by a user for registration for a particular piece of content and time information indicative of a time at which said user specified tag registration and a display controller (58).

## Description

The present invention contains subject matter related to Japanese Patent Application JP 2007-156972 filed in the Japan Patent Office on June 14, 2007, the entire contents of which being incorporated herein by reference.

### BACKGROUND OF THE INVENTION

### 1. Field of the Invention

The present invention relates to an information processing apparatus and method and a computer program and, more particularly, to an information processing apparatus and method and a computer program that are configured to intuitively understand user evaluations for a predetermined part in the contents of a particular piece of content.

### 2. Description of the Related Art

Recently, the sharing of content is commonly practiced, such as in reproducing a same piece of content on a plurality of content reproducing apparatuses including television receivers and HDD (Hard Disk Drive) recorders interconnected via a network, such as the Internet. For the evaluation of predetermined pieces of content by users in this environment, methods are proposed in which the impression of the user about a particular piece of content is measured in numerical terms and a resultant numeric value is attached to that content.

For example, in one proposed method, impression data of a particular piece of content is recorded along with music data thereof beforehand and, in outputting sound, a light emitting block is turned on in an illuminant color determined by that impression data (refer to Japanese Patent Laid-Open No. 2006-317872).

This method allows the user to easily recognize how the music data being reproduced is evaluated.

However, with the above-mentioned related-art technique, although the evaluation of an entire piece of content being reproduced can be recognized, it is difficult to recognize the evaluation of a particular part of that particular piece of content.

In order to overcome this shortcoming, a technique has recently been proposed in which a tag is attached to a predetermined part of content. In this technique, a tag is attached (or registered) to a part of user's interest of a particular piece of content being reproduced in accordance with a user's operation.

### SUMMARY OF THE INVENTION

However, the tag used in the above-mentioned related-art technique has no information indicative of user emotions, so that it is difficult to recognize how a predetermined part of a particular piece of content has been specifically evaluated by the user.

Therefore, the present invention addresses the above-identified and other problems associated with related-art methods and apparatuses and solves the addressed problems by providing an information processing apparatus and method and a computer program that are configured to allow the intuitive understanding of user's specific evaluations on a predetermined part in a particular piece of content.

In carrying out the invention and according to one mode thereof, there is provided an information processing apparatus or a computer program configured to control the processing steps executed by this information processing apparatus. This information processing apparatus has a taker configured to take registration count information associated with the number of pieces of registration information including identification information for identifying a tag included in the tag specified by a user for registration for a particular piece of content among tags representative of emotions and time information indicative of a time at which the user specified tag registration. Further, this information processing apparatus has a display controller configured to control, in a display area defined by a first axis indicative of a time and a second axis indicative of the number of pieces of registration information, displaying, on the basis of the registration count information, an icon representative of an emotion indicated by a tag identified by the identification information onto a position identified by a position along the first axis indicative of a predetermined time and a position along the second axis indicative of the number of pieces of registration information having substantially the same identification information among the registration information having the time information indicative of a time included in a predetermined unit time including the predetermined time.

The above-mentioned information processing apparatus additionally has a generator configured to generate the registration information as specified by the user for tag registration, wherein the taker generates the registration count information by use of the registration information generated by the generator.

In the above-mentioned information processing apparatus, the taker takes, from another apparatus, the registration count information generated as specified by a user of another apparatus for tag registration.

In the above-mentioned information processing apparatus, the taker takes registration count information associated with a count obtained, added up for each of the identification information, by the number of pieces of registration information generated in accordance with tag specification by a plurality of other users.

In the above-mentioned information processing apparatus, the registration information further includes region information indicative of a region in which a particular piece of content for which tag registration is made and channel information indicative of a channel on which the particular piece of content is being broadcast and the display controller controls, on the basis of the registration count information, displaying of the icon representative of an emotion expressed by a tag identifying by the identification information onto a position defined by a position along the first axis indicative of the predetermined time and a position along the second axis indicative of the number of pieces of the registration information having the same region information, the same channel information, and the identification information among the registration information having time information indicative of a time included in a predetermined unit time including the predetermined time.

In the above-mentioned information processing apparatus, the particular piece of content for which tag registration is made is a television program.

In carrying out the invention and according to another mode thereof, there is provided an information processing method. This information processing method has the steps of taking registration count information associated with the number of pieces of registration information including identification information for identifying a tag included in the tag specified by a user for registration for a particular piece of content among tags representative of emotions and time information indicative of a time at which the user specified tag registration; and controlling, in a display area defined by a first axis indicative of a time and a second axis indicative of the number of pieces of registration information, displaying, on the basis of the registration count information, an icon representative of an emotion indicated by a tag identified by the identification information onto a position identified by a position along the first axis indicative of a predetermined time and a position along the second axis indicative of the number of pieces of registration information having substantially the same identification information among the registration information having the time information indicative of a time included in a predetermined unit time including the predetermined time.

In carrying out the invention and according to still another mode thereof, there is provided a computer program. This computer programs has the steps of taking registration count information associated with the number of pieces of registration information including identification information for identifying a tag included in the tag specified by a user for registration for a particular piece of content among tags representative of emotions and time information indicative of a time at which the user specified tag registration; and controlling, in a display area defined by a first axis indicative of a time and a second axis indicative of the number of pieces of registration information, displaying, on the basis of the registration count information, an icon representative of an emotion indicated by a tag identified by the identification information onto a position identified by a position along the first axis indicative of a predetermined time and a position along the second axis indicative of the number of pieces of registration information having substantially the same identification information among the registration information having the time information indicative of a time included in a predetermined unit time including the predetermined time.

According to one mode of the embodiment of the present invention, the evaluation for a particular piece of content can be made and, especially, the user's specific evaluation of a predetermined part of a particular piece of content can be understood intuitively.

### BRIEF DESCRIPTION OF THE DRAWINGS

FIG. 1 is a schematic diagram illustrating an exemplary configuration of a tag registration system to which the embodiment of the present invention is applied;
FIG. 2 is a block diagram illustrating an exemplary functional configuration of a display apparatus practiced as one embodiment of the invention;
FIG. 3 illustrates a configuration of a tag;
FIG. 4 illustrates examples of tag types;
FIG. 5 illustrates a configuration of tag registration data;
FIG. 6 illustrates a configuration of tag registration count data;
FIG. 7 is a block diagram illustrating an exemplary configuration of the hardware of a tag management server;
FIG. 8 is a block diagram illustrating an exemplary functional configuration of the tag management server;
FIG. 9 illustrates an exemplary tag display window;
FIG. 10 is a flowchart indicative of the processing of tag registration and the processing of adding up tag registration counts;
FIG. 11 illustrates an exemplary display of the tag display window; and
FIG. 12 illustrates another exemplary display of the tag display window.

### DETAILED DESCRIPTION OF THE PREFERRED EMBODIMENTS

This invention will be described in further detail by way of example with reference to the accompanying drawings. The invention described herein and the embodiments thereof have the following correlation. The description hereof is intended to make sure of the fact that the embodiments supporting the invention described herein are described herein. Therefore, if there is any embodiment that, although described in the description of the preferred embodiment, is not described herein as corresponding to the invention, this does not denote in any manner that such an embodiment does not corresponding to the present invention. Conversely, if any embodiment is described herein as corresponding to the invention, it does not denote in any manner that such an embodiment does not corresponding to other inventions than the present invention.

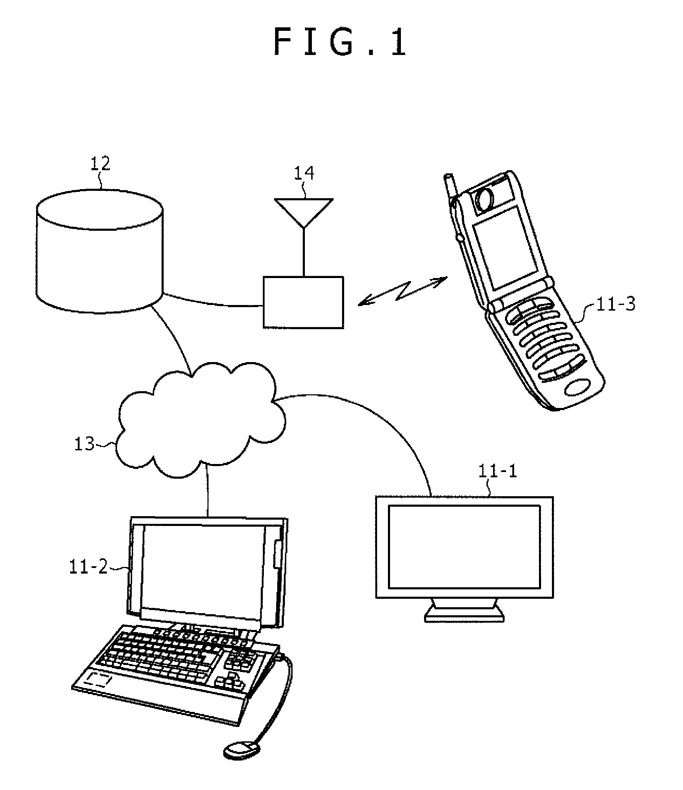

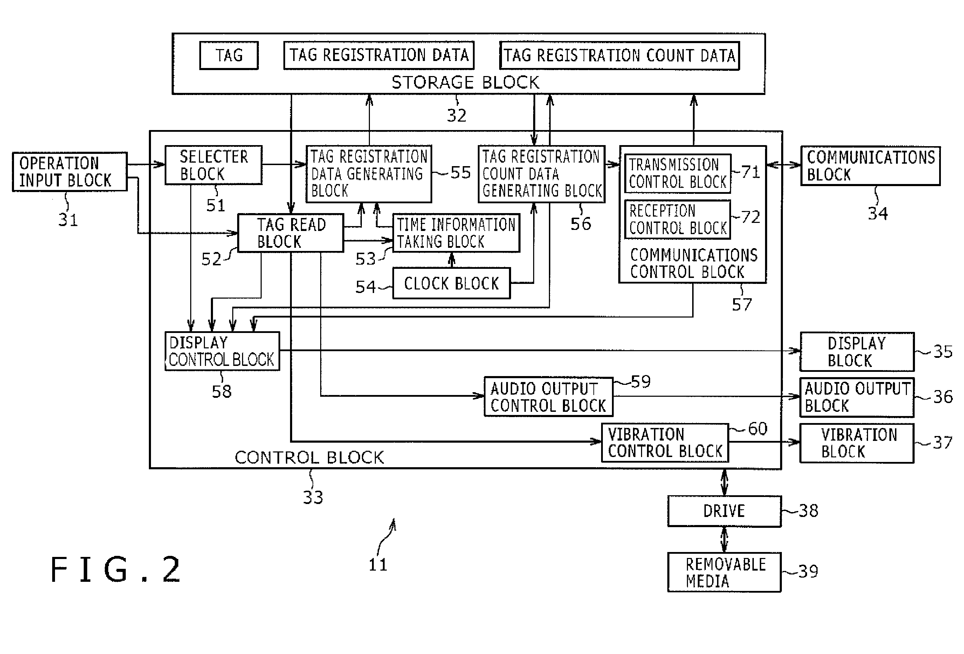

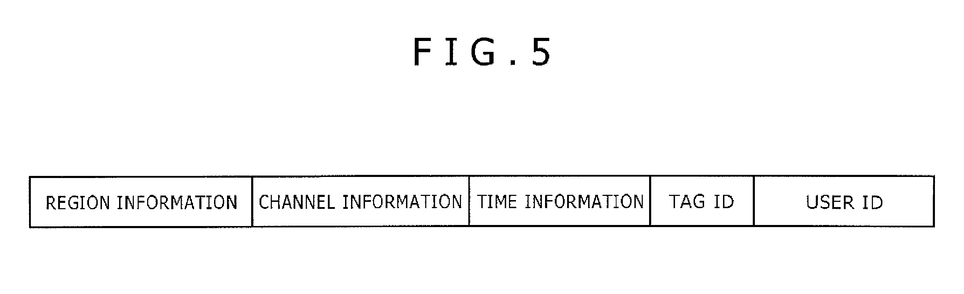

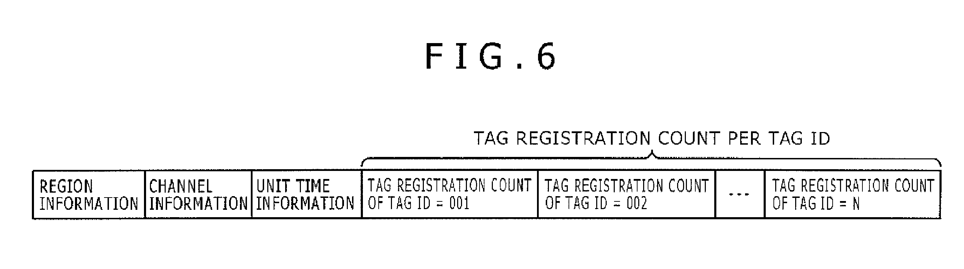

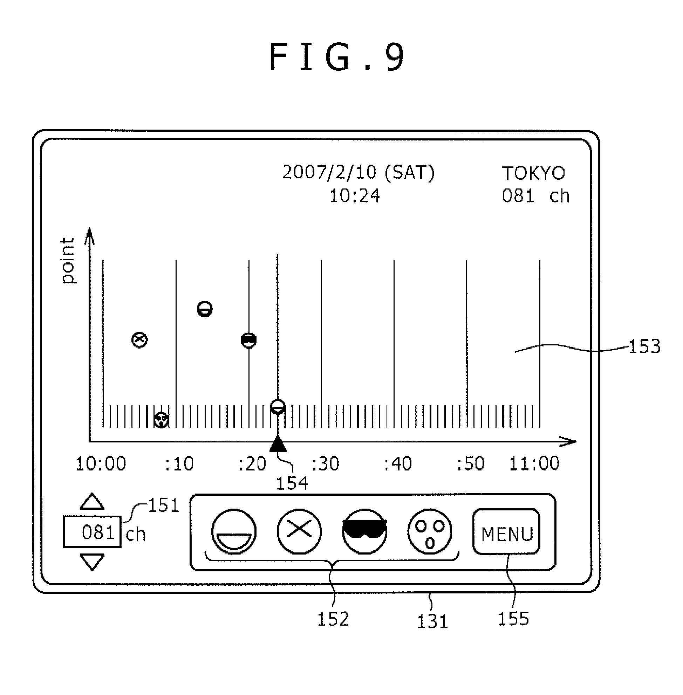

The information processing apparatus (for example, display apparatuses 11-1 through 11-3 shown in FIG. 1) according to one mode of the invention or the computer program that functions a computer as the information processing apparatus that has a taker (for example, a tag registration count data generating block 56 or reception control block 72 shown in FIG. 2) configured to take registration count information (for example, tag registration count information shown in FIG. 6) associated with the number of pieces of registration information (for example, tag registration information shown in FIG. 5) including identification information for identifying a tag included in the tag specified by a user for registration for a particular piece of content among tags representative of emotions and time information indicative of a time at which the user specified tag registration; and a display controller (for example, a display control block 58 shown in FIG. 2) configured to control, in a display area (for example, an icon display area 153 shown in FIG. 9) defined by a first axis indicative of a time and a second axis indicative of the number of pieces of registration information, displaying, on the basis of the registration count information, an icon representative of an emotion indicated by a tag identified by the identification information onto a position identified by a position along the first axis indicative of a predetermined time and a position along the second axis indicative of the number of pieces of registration information having substantially the same identification information among the registration information having the time information indicative of a time included in a predetermined unit time including the predetermined time.

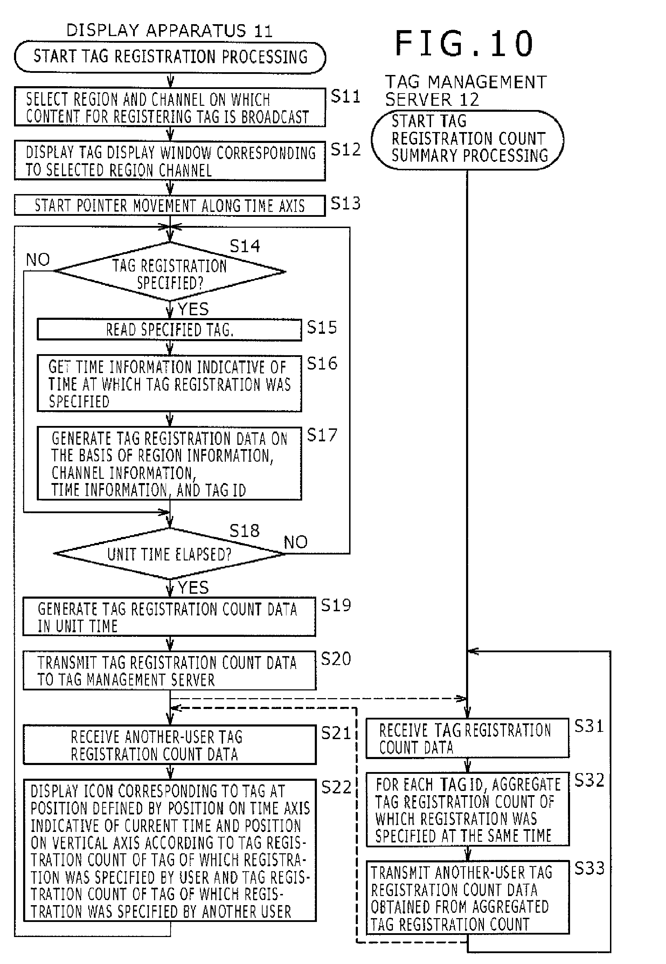

The above-mentioned information processing apparatus additionally has a generator (for example, a tag registration data generating block 55 shown in FIG. 2) configured to generate the registration information as specified by the user for tag registration, wherein the taker generates the registration count information by use of the registration information generated by the generator (for example, step S19 shown in FIG 10).

In the above-mentioned information processing apparatus, the taker takes, from another apparatus, the registration count information generated as specified by a user of another apparatus for tag registration (for example, step S21 shown in FIG 10).

In the above-mentioned information processing apparatus, the taker takes registration count information associated with a count obtained, added up for each of the identification information, by the number of pieces of registration information generated in accordance with tag specification by a plurality of other users (for example, step S21 shown in FIG 10).

In the above-mentioned information processing apparatus, the registration information may further include region information indicative of a region in which a particular piece of content for which tag registration is made and channel information indicative of a channel on which the particular piece of content is being broadcast and the display controller may control, on the basis of the registration count information, displaying of the icon representative of an emotion expressed by a tag identifying by the identification information onto a position defined by a position along the first axis indicative of the predetermined time and a position along the second axis indicative of the number of pieces of the registration information having the same region information, the same channel information, and the identification information among the registration information having time information indicative of a time included in a predetermined unit time including the predetermined time (for example, step S22 shown in FIG 10).

The information processing method according to another mode of the present invention has the steps of taking registration count information associated with the number of pieces of registration information including identification information for identifying a tag included in the tag specified by a user for registration for a particular piece of content among tags representative of emotions and time information indicative of a time at which the user specified tag registration (for example, step S19 or step S21 shown in FIG. 10); and controlling, in a display area defined by a first axis indicative of a time and a second axis indicative of the number of pieces of registration information, displaying, on the basis of the registration count information, an icon representative of an emotion indicated by a tag identified by the identification information onto a position identified by a position along the first axis indicative of a predetermined time and a position along the second axis indicative of the number of pieces of registration information having substantially the same identification information among the registration information having the time information indicative of a time included in a predetermined unit time including the predetermined time (for example, step S22 shown in FIG 10).

This invention will be described in further detail by way of embodiments thereof with reference to the accompanying drawings.

Now, referring to FIG. 1, there is shown an exemplary configuration of a tag registration system to which the embodiment of the present invention is applied.

As shown in FIG. 1, this tag registration system has three display apparatuses 11-1 through 11-3 and a tag management server 12 that are interconnected via the Internet 13 and a base station 14.

The display apparatus 11-1 is a television set for example and the display apparatus 11-2 is a personal computer for example. The display apparatus 11-3 is a portable terminal apparatus, such as a mobile phone, for example. It should be noted that the number of the display apparatuses to be connected to the Internet 13 and the base station 14 may be other than three.

The display apparatuses 11-1 through 11-3 have a function of receiving the content broadcast by the terrestrial analog broadcasting, the terrestrial digital broadcasting or the BS (Broadcasting Satellite)/ CS (Communications Satellite) digital broadcasting or the content distributed from a content server, not shown, via the Internet 13 or the base station 14 and letting the user view and hear the received content.

It should be noted that, in what follows, content is assumed to be a television broadcast program, for example, However, content may also be other than television broadcast programs and moving images may be music, for example.

The display apparatuses 11-1 through 11-3 register tags that are data indicative of various emotions into a predetermined part of a particular piece of content under view by the user who operates one of the display apparatuses 11-1 through 11-3 by an application (for a television set, Aplicast (trademark) for example; for a personal computer, a Web browser for example; and for a mobile phone, i-appli (trademark) for example) that operates on the platform of each of these apparatuses. Then, these apparatuses transmit the information associated with the tag registered into a particular piece of content to a tag management server 12.

The above-mentioned registration of a tag into content denotes the generation of tag registration data shown in FIG. 5 to be described later.

It should be noted that the user of each of the display apparatuses 11-1 through 11-3 can operate one of these apparatuses while viewing content thereon to direct the registration of a tag for the content or operate one of the display apparatuses 11-1 through 11-3 while viewing an apparatus other than the display apparatuses 11-1 through 11-3 to direct the registration of a tag for the content.

In what follows, unless otherwise noted, the display apparatuses 11-1 through 11-3 will be generically referred to as a display apparatus 11.

The tag management server 12 stores (or manages) information associated with a tag received from the display apparatus 11. The information associated with the tag stored in the tag management server 12 is shared by the display apparatuses 11-1 through 11-3.

FIG. 2 shows a block diagram of an exemplary functional configuration of the display apparatus 11.

The display apparatus 11 has an operation input block 31, a storage block 32, a control block 33, a communications block 34, a display block 35, an audio output block 36, and a vibration block 37.

The display apparatus 11 can be connected with a drive 38 as desired. The drive 38 is loaded with a removable media 39, such as a magnetic disk, an optical disk, a magneto-optical disk, or a semiconductor memory, as desired. Under the control of the control block 33, the drive 38 reads computer programs and data from the loaded removable media 39 and install or store the read programs and data into the storage block 32 as desired.

The operation input block 31 is operated by the user in entering commands, for example, for the display apparatus 11 to supply operation signals indicative of the contents of the operation done by the user to the control block 33.

For example, if the display apparatus 11 is a television set, the operation input block 31 is made up of a remote controller; if the display apparatus 11 is a personal computer, the operation input block 31 is made up of a keyboard and a mouse. Also, for example, if the operation input block 31 is a mobile phone, the operation input block 31 is made up of keys that are operated to enter subscriber numbers for originating calls. Further, the operation input block 31 may be a touch panel mounted on the display block 35 to be described later. Besides, if the display apparatus 11 is a game machine connected to a network, the operation input block 31 may be a controller connected to that game machine in a wired or wireless manner.

The storage block 32 is made up of a storage media that is random accessible, such as a flash memory, and stores various kinds of data and computer programs.

The storage block 32 stores tags that are data indicative of various kinds of emotions. These tags can be stored in the storage block 32 in advance or downloaded from a server, such as the tag management server 12, into the display apparatus 11 to be stored in the storage block 32.

Further, the storage block 32 stores tag registration data having, in a related manner, a tag ID (Identification) that provides identifying information for identifying a tag specified by the user for registration and time information indicative of a time at which the registration of that tag was specified.

Still further, the storage block 32 stores tag registration count data that is data indicative of the number of tags specified by the user for registration (a tag registration count), as classified by type.

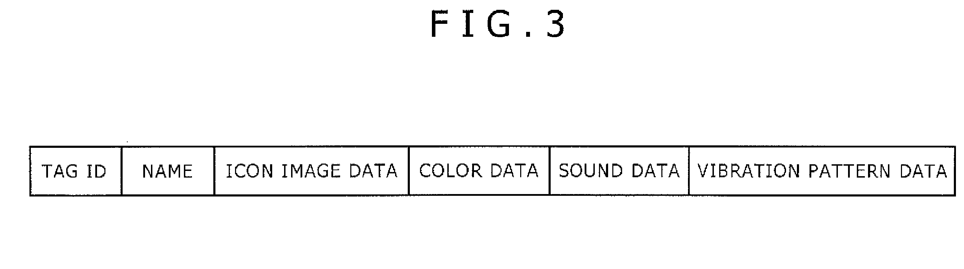

Now, referring to FIGS. 3 through 6, tags, the tag registration data and the tag registration count data to be stored in the storage block 32 will be described in detail.

FIG. 3 shows an example of tag configuration.

The tag is made up of a tag ID, a name, an icon indicator, color data, sound data, and vibration pattern data.

The tag ID provides information for identifying a particular tag. Specifically, a tag ID is a 3-digit number 001 to 999, for example. It should be noted that a tag ID may also be a character string rather than numbers, for example.

The name is text data indicative of (a type of) emotion to be expressed by a tag. Specifically, a name is "NICE" indicative of a nice emotion or "BAD" indicative of a bad emotion, for example. Therefore, a tag having name "NICE" is indicative of "nice" emotion and a tag having name "BAD" is indicative of "bad" emotion. There are other tags that express various other emotions.

The icon image data is image data indicative of an icon for expressing an emotion to be specified by a tag. For example, the icon image data of a tag indicative of "nice" emotion (a tag of which name is "NICE") displays an icon of a smiling face. The icon image data of a tag indicative of "bad" emotion (a tag of which name is "BAD") displays an icon of grimacing face, for example.

The color data provides information for specifying a color of an icon to be displayed by the icon image data. For the color data, data indicative of colors that evoke emotions represented by tags are used. For example, a color that evokes a "nice" emotion may be yellow and a color that evokes a "bad" emotion may be blue.

The sound data is audio data for outputting tones representative of emotions indicated by tags. For example, a tag indicative of "nice" emotion may use hand clapping sound and a tag indicative of "bad" emotion may use booing voice sound.

The vibration pattern data is data for generating a vibration having a predetermined pattern. For example, there are four types of patterns; pattern A in which two vibrations are generated in a second, pattern B in which one vibration is generated in a second, pattern C in which vibration is generated in match with sound data, and pattern D in which no vibration is generated.

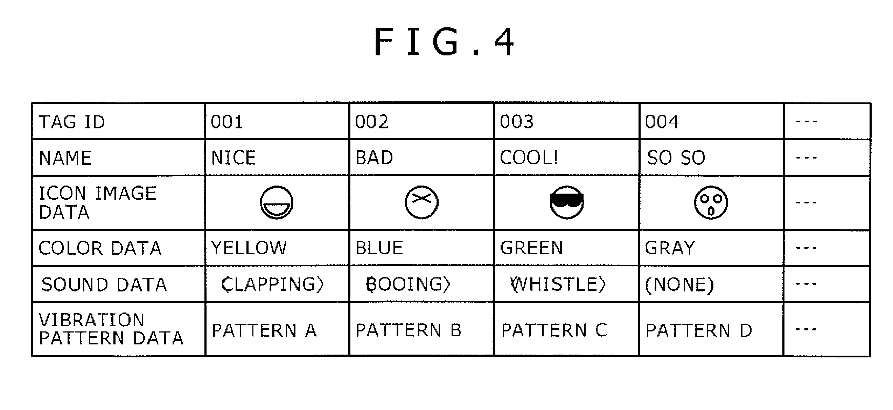

FIG. 4 shows an example of tag types.

As shown in FIG. 4, the tag having tag ID 001 expresses "nice" emotion, having "NICE" indicative of "nice" emotion as the name, image data indicative of a smiling face as the icon image data, yellow as the color data, hand clapping sound as sound data, and vibration pattern A as vibration pattern data.

The tag having tag ID 002 expresses "bad" emotion, having "BAD" indicative of "bad" emotion as the name, image data indicative of a grimacing face as the icon image data, blue as the color data, booing sound as sound data, and vibration pattern B as vibration pattern data.

The tag having tag ID 003 expresses "cool!" emotion, having "COOL!" indicative of "cool!" emotion as the name, image data indicative of a sun-glassed face as the icon image data, green as the color data, whistle sound as sound data, and vibration pattern C as vibration pattern data.

The tag having tag ID 004 expresses "subtle" emotion, having "SUBTLE" indicative of "too subtle to judge" emotion as the name, image data indicative of a confused face as the icon image data, gray as the color data, and vibration pattern D as vibration pattern data. It should be noted that the tag having tag ID 004 has no sound data.

The types of tags are not limited to the above-mentioned four types and may be added later by the user.

FIG. 5 shows an example of a tag registration data configuration.

The tag registration data is made up of region information, channel information, time information, a tag ID, and a user ID.

The region information is indicative of a region in which a particular piece of content for which a tag is registered (or a particular piece of content being viewed by the user) is being broadcast (or broadcast in the past). For example, the region information may include the name of a prefecture or the name of a city in which a particular piece of content for which a tag is registered is being broadcast.

The channel information is indicative of a channel on which a particular piece of content for which a tag is registered is being broadcast (or broadcast in the past). For example, the channel information is a number indicative of a channel on which a particular piece of content for which a tag is registered is being broadcast.

The time information is indicative of a time at which the registration of a tag in a particular piece of content was specified. The time information is indicative of date and time (year, month, day, hour, minute, and second) in unit of second, for example.

The tag ID in the tag registration data is substantially the same as the tag ID in the tag (FIG. 3), namely, the tag ID included in the tag specified for registration in a particular piece of content by the user.

The user ID is information for identifying user information, such as the name of the user of the display apparatus 11, for example. The user ID is set by the user by operating the operation input block 31 of the display apparatus 11.

FIG. 6 shows an example of tag registration count data configuration.

The tag registration count data is made up of region information, channel information, unit time information, and a tag registration count for each tag ID.

The region information in the tag registration count data is substantially the same as the region information in the tag registration data and therefore is indicative of a region in which a particular piece of content is being broadcast. The channel information in the tag registration count data is substantially the same as the channel information in the tag registration data and therefore is indicative of a channel on which a particular piece of content is being broadcast.

The unit time information is indicative of a certain time zone made up of information indicative of a predetermined unit time and information indicative of a time at which this unit time starts (hereafter appropriately referred to as a start time). For example, the unit time information indicative of a time zone of one minute starting from 10:24 of February 10, 2007 is made up of information indicative that the start time is 10:24 of February 10, 2007 and information indicative that the unit time is one minute. Also, for example, the unit time information indicative of a time zone of 10 minutes starting from 10:30 of February 10, 2007 is made up of information indicative that the start time is 10:30 of February 10, 2007 and information indicative that the unit time is 10 minutes.

The tag registration count for each tag ID is indicative of the number of tags by type specified for registration in a time zone indicated by the unit time information (for example, if the start time is 10:24 of February 10, 2007 and the unit time is one minute, a time zone of one minute starting from 10:24 of February 10, 2007). Specifically, as shown in FIG. 6, the tag registration count for each tag ID is made up of a tag registration count of the tag having tag ID 001, a tag registration count of the tag having tag ID 002, ..., a tag registration count of the tag having tag ID N (N = 001 to 999) specified for registration in the time zone of a unit time starting from a start time.

For example, if the unit time information is made up of the information indicative that the start time is 10:30 of February 10, 2007 and the information indicative that the unit time is 10 minutes, then the tag registration count for each tag ID is indicative of the count for each type of the tag specified for registration in the 10 minutes (or the time zone thereof) between 10:30 and 10:40 of February 10, 2007.

Referring to FIG. 2 again, the control block 33, made up of a microprocessor for example, controls the display apparatus 11 in its entirety. Details of the control block 33 will be described later.

The communications block 34 transmits and receives various kinds of data through a network, such as the Internet 13, or the wireless communication with the base station 14. For example, if the display apparatus 11 is a television set or a personal computer, the communications block 34 is a network interface that executes wired communication, thereby transmitting and receiving various kinds of data via the Internet 13. If the display apparatus 11 is a mobile phone, for example, the communications block 34 is configured to contain an antenna for wireless communication, thereby transmitting and receiving various kinds of data by the wireless communication with the base station 14.

The display block 35 is made up of a display device, such as an LCD (Liquid Crystal Display) or an organic EL (Electro Luminescence), and displays various kinds of images on the basis of image data supplied from the control block 33.

The audio output block 36, made up of a loudspeaker, for example, outputs, under the control of the control block 33, sound in accordance with an audio signal supplied from the control block 33.

The vibration block 37 is made up of a motor attached with an eccentric weight. Under the control of the control block 33, the vibration block 37 vibrates in accordance with a signal indicative of a vibration pattern supplied from the control block 33, thereby vibrating a part or all of the display apparatus 11. For example, if the display apparatus 11 is a television set, the vibration block 37 is mounted inside a remote controller that is the operation input block 31 to vibrate the entire remote controller. If the display apparatus 11 is a mobile phone, then the vibration block 37 is mounted inside the housing of the display apparatus 11 to vibrate the entire display apparatus 11.

When a CPU (Central Processing Unit), not shown, executes computer programs, the control block 33 functions as a selector block 51, a tag read block 52, a time information taking block 53, a clock block 54, a tag registration data generating block 55, a tag registration count data generating block 56, a communications control block 57, a display control block 58, an audio output control block 59, and a vibration control block 60.

To the selector block 51, an operation signal is supplied from the operation input block 31. In accordance with the operation signal supplied from the operation input block 31, the selector block 51 selects a region and a channel in and on which a particular piece of content for which a tag is to be registered is being broadcast.

Specifically, on the basis of an operation signal, supplied from the operation input block 31, corresponding to an operation by the user to select a region and a channel in and on which a particular piece of content for which a tag is to be registered is being broadcast, the selector block 51 these region and channel and supplies the region information and channel information indicative of the selected region and channel to the tag registration data generating block 55 and the display control block 58.

To the tag read block 52, an operation signal is supplied from the operation input block 31. In accordance with the operation signal supplied from the operation input block 31, the tag read block 52 reads a tag (indicative of an emotion) specified by the user for registration.

Specifically, on the basis of an operation signal, supplied from the operation input block 31, corresponding to a user operation for specifying tag registration, the tag read block 52 reads the tag specified for registration (indicative of an emotion) from among tags indicative of a plurality of emotions stored in the storage block 32.

The tag read block 52 supplies the tag ID of the tag (FIG. 3) read from the storage block 32 to the tag registration data generating block 55 and relates the icon image data and the color data with the tag ID to supply these related data and tag ID to the display control block 58. Also, the tag read block 52 supplies the sound data of the tag read from the storage block 32 to the audio output control block 59 and the vibration pattern data to the vibration control block 60.

In accordance with an operation signal, supplied from the operation input block 31, corresponding to a user operation for specifying tag registration, the tag read block 52 supplies a command to the time information taking block 53 for getting a time at which the tag registration was specified.

On the basis of the command supplied from the tag read block 52, the time information taking block 53 gets, from the clock block 54, time information indicative of a time (a current time) at which the tag registration was specified. The time information taking block 53 supplies the time information obtained from the clock block 54 to the tag registration data generating block 55.

The clock block 54 outputs the date and time (year, month, day, hour, minute, and second) of current time to supply the date and time to the time information taking block 53 and the tag registration count data generating block 56.

The tag registration data generating block 55 generates the tag registration data shown in FIG. 5 and supplies the generated tag registration data to the storage block 32. Specifically, having received the tag ID from the tag read block 52, the tag registration data generating block 55 generates the tag registration data shown in FIG. 5 on the basis of the received tag ID, the region information and channel information supplied from the selector block 51, the time information supplied from the time information taking block 53, and the preset user ID, thereby supplying the generated tag registration data to the storage block 32.

On the basis of the tag registration data of the storage block 32, the tag registration count data generating block 56 generates the tag registration count data shown in FIG. 6 for each unit time, for example, and supplies the generated tag registration count data to the storage block 32, the communications control block 57, and the display control block 58.

Specifically, using, as a start time, a current time outputted from the clock block 54 expressed in a unit time accuracy, the tag registration count data generating block 56 searches the storage block 32 for the tag registration data having time information indicative of a time during a unit time (or a time zone) from that start time (this data hereafter appropriately referred to as time-match tag registration data).

Further, the tag registration count data generating block 56 divides the time-match tag registration data into groups of tag registration data having the same region information and channel information and counts the number of tag registration data (or a tag registration count) having tag IDs of all values for each group.

Next, the tag registration count data generating block 56 arranges, for each of these groups, the region information and channel information corresponding to each group, the unit time information representative of start time and unit time, and the tag registration count of tag registration data having tag IDs of all values, in this order, thereby generating the tag registration count data shown in FIG. 6.

For example, if the unit time is one minute and the start time with a current time to be outputted from the 54 expressed in unit time accuracy is 10:24 February 10, 2007, only 10 tag registration data having the same region information and channel information and having the time information indicative of a time in one-minute time zone that is a unit time starting from the start time 10:24 February 10, 2007 are stored, and, of these 10 tag registration data, there are six tag registration data having tag ID 001, one tag registration data having tag ID 003, and three tag registration data having tag ID 004, then the tag registration count data generating block 56 generates the unit time information made up of the information indicative of start time of 10:24 February 10, 2007 and the information indicative that unit time is one minute and the tag registration count data including "6" that is the tag registration count of the tag having tag ID 001, "1" that is the tag registration count of the tag having tag ID 003, and "3" that is the tag registration count of the tag having tag ID 004. It should be noted that the unit time of one minute for example can be set by the user in advance.

It should be noted that the time zone of a unit time starting from a start time is hereafter referred to as a slot, as desired.

The communications control block 57, made up of a transmission control block 71 and a reception control block 72, control the communication via a network, such as the Internet 13, and the transmission and reception of various kinds of data with the base station 14 in a wireless manner, through the communications block 34.

The transmission control block 71 controls the transmission that is executed by the communications block 34. Namely, the transmission control block 71 supplies various kinds of data to the communications block 34 to make the communications block 34 transmit the various kinds of information through a network.

For example, the transmission control block 71 makes the communications block 34 transmit the tag registration count data supplied from the tag registration count data generating block 56 to the tag management server 12.

The reception control block 72 controls the reception to be executed by the communications block 34. Namely, the reception control block 72 makes the communications block 34 receive various kinds of data transmitted via a network to get the data received by the communications block 34.

For example, the reception control block 72 makes the communications block 34 receive the data, transmitted from the tag management server 12, including the values corresponding to the tag registration count of tags specified by another user for registration (for example, another-user tag registration count data, etc.). The reception control block 72 supplies the data received through the communications block 34 to the display control block 58.

The display control block 58 controls a display operation on the display block 35 in accordance with the region information and channel information supplied from the selector block 51., the icon image data and color data supplied from the tag read block 52, the tag registration count data supplied from the tag registration count data generating block 56, and the another-user tag registration count data supplied from the communications control block 57 (or the reception control block 72). For example, the display control block 58 makes the display block 35 display the predetermined icon on the basis of the icon image data and color data supplied from the tag read block 52. Details of the display control operation to be executed by the display control block 58 will be described later.

The audio output control block 59 controls an audio output operation of the audio output block 36. Namely, on the basis of the sound data supplied from the tag read block 52, the audio output control block 59 makes the audio output block 36 output sound.

The vibration control block 60 controls a vibration operation of the vibration block 37. Namely, on the basis of a vibration pattern data supplied from the tag read block 52, the vibration control block 60 vibrates the vibration block 37.

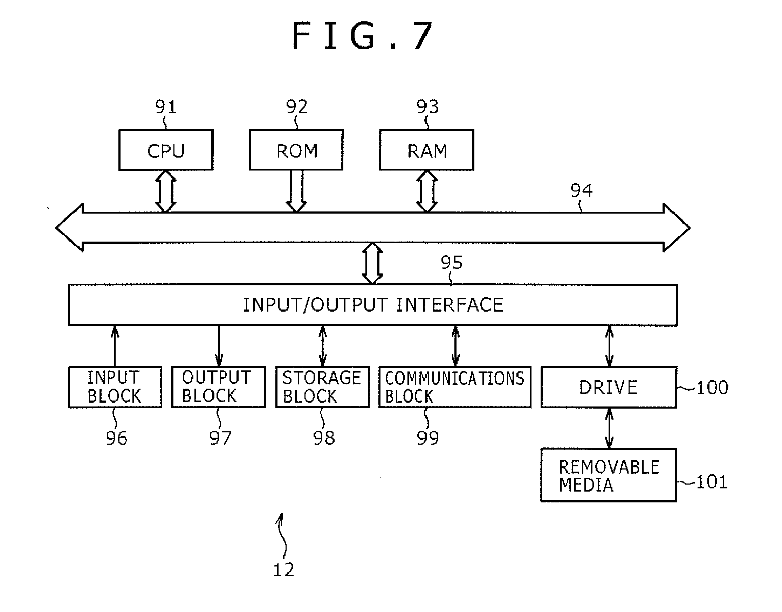

FIG. 7 is a block diagram illustrating an exemplary hardware configuration of the tag management server 12.

The tag management server 12 shown in FIG. 7 is made up of a CPU (Central Processing Unit) 91, a ROM (Read Only Memory) 92, a RAM (Random Access Memory) 93, a bus 94, an input/output interface 95, an input block 96, an output block 97, a storage block 98, a communications block 99, a drive 100, and a removable media 101.

The CPU 91 executes various processing operations as instructed by programs stored in the ROM 92 or the storage block 98. The RAM 93 stores programs to be executed by the CPU 91 and the data necessary for this execution. The CPU 91, the ROM 92, and the RAM 93 are interconnected with the bus 94.

The CPU 91 is also connected with the input/output interface 95 with the bus 94. The input/output interface 95 is connected with the input block 96 made up of a keyboard, a mouse, and a microphone, for example, and the output block 97 made up of a display monitor and a loudspeaker, for example. The CPU 91 executes various processing operations according to commands entered through the input block 96. In addition, the CPU 91 outputs the results of these processing operations to the output block 97.

The storage block 98 connected to the input/output interface 95 is made up of a hard disk drive, for example, that stores programs to be executed by the CPU 91 and data to be transmitted to the display apparatus 11. The communications block 99 is configured to communicate with external devices, such as the display apparatus 11, via a network, such as the Internet 13 or a LAN (Local Area Network) or the base station 14.

The drive 100 connected to the input/output interface 95 drives the removable media 101, such as a magnetic disk, an optical disk, a magneto-optical disk, or a semiconductor memory loaded thereon to get programs and data from the loaded removable media 101. The obtained programs and data are transmitted to the storage block 98 as desired to be stored therein.

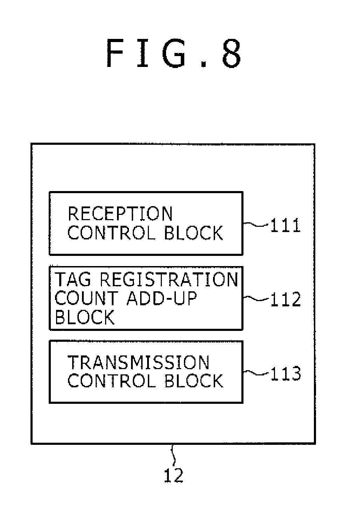

FIG. 8 shows a block diagram illustrating an exemplary functional configuration to be realized by the CPU 91 of the tag management server 12 that executes programs.

As shown in FIG. 8, the tag management server 12 functions as a reception control block 111, a tag registration count summary block 112, and a transmission control block 113 when the CPU 91 executes corresponding programs.

The reception control block 111 controls a receiving operation that is executed by the communications block 99 (FIG. 7). For example, the reception control block 111 makes the communications block 99 receive various kinds of data supplied from the display apparatus 11. Specifically, for example, the reception control block 111 makes the communications block 99 receive tag registration count data supplied from each display apparatus 11 and supply the received data to the tag registration count add-up block 112.

On the basis of the tag registration count data supplied from the reception control block 111, the tag registration count add-up block 112 adds up, for each tag ID, the number of tags specified for registration for a particular piece of content identified by the same region information and channel information in the same time zone. Specifically, of the tag registration count data supplied from the display apparatuses 11, the tag registration count add-up block 112 uses the tag registration data having the same region information, channel information, and unit time information as the data to be added up, thereby adding up these tag registration count data for each tag ID. The tag registration count add-up block 112 generates all-user tag registration count data with the added-up tag registration count for each tag ID correlated with the region information, channel information, and unit time information of the tag registration count data to be added up and supplies the generated all-user tag registration count data to the storage block 98 (FIG. 7) and the transmission control block 113. It is assumed here that the structure of all-user tag registration count data be substantially the same as the structure of the tag registration count data shown in FIG. 6.

The transmission control block 113 controls a transmitting operation that is executed by the communications block 99. For example, the transmission control block 113 makes the communications block 99 transmit various kinds of data. For example, the transmission control block 113 supplies the data based on the all-user tag registration count data supplied from the tag registration count add-up block 112 to the communications block 99 (FIG. 7) to make the communications block 99 transmit the supplied data.

Specifically, for example, the transmission control block 113 supplies, to the communications block 99, average tag registration count data having a value obtained by dividing the tag registration count for each tag ID in all-user tag registration count data by the number of display apparatuses 11 from which the tag registration count data on which the all-user tag registration count data was generated was supplied and makes the communications block 99 transmit the supplied average tag registration count data.

Also, for example, by using one of the display apparatuses 11 from which tag registration count data were supplied as an apparatus of attention, the transmission control block 113 supplies, to the communications block 99, another-user tag registration count data having, as a tag registration count for each tag ID, a value obtained by dividing a number obtained by subtracting a number the tag registration count for each tag ID of the tag registration count data supplied from the apparatus in attention from the tag registration count for each tag ID in all-user tag registration count data by a number obtained by subtracting the apparatus in attention from all display apparatuses 11 from which the tag registration count data were supplied (namely, a number obtained by subtracting one from all display apparatuses 11 from which the tag registration count data were supplied), thereby making the communications block 99 transmit the supplied another-user tag registration count data. Namely, the tag management server 12 transmits an average value of the number of tags indicative of substantially the same emotion specified for registration by a user other than the user of the apparatus in attention to the apparatus in attention.

The following describes a display control operation that is executed by the display control block 58 (FIG. 2) arranged in the display apparatus 11.

When the operation input block 31 is operated so as to select a mode which a tag is registered (namely, a tag registration mode), for example, the display control block 58 makes the display block 35 display a tag display window in which to display an icon corresponding to the tag at a position in accordance with a time at which the registration of the tag was specified and the tag registration count of that tag at that time.

Further, when the operation input block 31 is operated so as to enter region information and channel information, the display control block 58 displays the region information and channel information supplied from the operation input block 31 through the selector block 51 onto the tag display window.

FIG. 9 shows an exemplary tag display window that is displayed on the display block 35 by the display control block 58.

As shown in FIG. 9, a tag display window 131 has a channel select area 151, an icon button 152, an icon display area 153, a pointer 154, a menu button 155 (these are generically referred to as GUI (Graphical User Interface)).

In FIG. 9, shown in the upper right of the tag display window 131 are "2007/2/10 (Sat) 10:24" indicative that the current time is 10:24 of February 10, 2007, "Tokyo" indicative that a region in which a particular piece of content for which tag registration (a particular piece of content identified by the region information and channel information supplied by the selector block 51 to the display control block 58) is made is being broadcast is Tokyo, and "081ch" indicative that the channel on which this particular piece of content is being broadcast is channel 81.

The channel select area 151 is an area in which a channel indicated by the channel information supplied from the selector block 51 to the display control block 58 is displayed. In FIG. 9, the channel shown in the channel select area 151 is the same as the channel (namely, channel "081") shown in the upper right of the tag display window 131.

Here, a program (or a particular piece of content) currently broadcast on the channel displayed in the channel select area 151 is a particular piece of content for which a tag is registered or a particular piece of content indicative of a tag registration state (hereafter appropriately referred to as target content).

The icon button 152 is a button indicative of a tag that is a candidate for being specified by the user for registration. The image of the icon button 152 is displayed on the basis of the icon image data of the tag. It should be noted that the type of the icon button 152 to be displayed in the tag display window 131 can be changed by selecting the menu button 155 as described later.

The icon display area 153 is an area in which an icon based on the icon image data of a tag read by the tag read block 52 in accordance with the tag registration count data (FIG. 6) stored in the storage block 32 (including average tag registration count data and another-user tag registration count data as desired) is displayed. In the icon display area 153, the horizontal axis represents the time axis, while the vertical axis represents the number of tags registered for the target content, namely, the number of generated tag registration data.

In FIG. 9, the time axis is indicative of one hour, from 10:00 to 11:00; however, it is also practicable for the time axis to represent other time units than one hour. Also, the time represented by the time axis may be a predetermined time, such as one hour from a time at which the tag registration mode was selected by the user, for example.

The pointer 154, which points at the current time, is displayed at a position indicative of the current time on the time axis in the icon display area 153, moving to the right as time passes. In FIG. 9, the current time displayed in the upper right of the tag display window 131 is the same as the time at which the pointer 154 is located.

The menu button 155 is selected to determine or change various kinds of setting associated with the display on the tag display window 131. For example, the menu button 155 is selected to determine a region or a channel in or on which a target content is being broadcast or change the type of the icon button 152 to be selected by the user.

With the tag display window 131 as described above displayed, the user operates, through the operation input block 31, the icon button 152 for expressing an emotion felt by the user for the target content. In this case, the operation input block 31 transmits, to the control block 33, an operation signal for specifying the registration of a tag expressing an emotion corresponding to the icon button 152 in accordance with a user operation.

In the control block 33, an operation signal from the operation input block 31 is supplied to the tag read block 52. In accordance with the operation signal from the operation input block 31 specified for tag registration, the tag read block 52 reads the tag from the storage block 32 and supplies the tag ID of the read tag to the tag registration data generating block 55. Receiving the tag ID of the tag read by the tag read block 52, the tag registration data generating block 55 registers the tag for the target content.

Namely, assume that the tag of which tag ID is supplied from the tag read block 52 to the tag registration data generating block 55 be a target tag, then, by use of the supply of the tag ID of the target tag from the tag read block 52 as a trigger, the tag registration data generating block 55 generates tag registration data (FIG. 5) having the tag ID of the target tag for the target content.

Specifically, the tag registration data generating block 55 recognizes the region information and channel information supplied from the selector block 51 as the region information and channel information of the target content and, at the same time, recognizes the time information supplied from the time information taking block 53 when the tag ID of the target tag had been supplied from the tag read block 52 as the time information indicative of a time at which the registration of the tag was specified.

Further, by arranging the region information and channel information of the target content, the time information supplied from the time information taking block 53, the tag ID of the target tag supplied from the tag read block 52, and the user ID in this order, the tag registration data generating block 55 generates the tag registration data for the target content and supplies the generated tag registration data to the storage block 32 to be stored therein.

On the other hand, the tag registration count data generating block 56 references the tag registration data stored in the storage block 32 for the target content every time the unit time passes to generate the tag registration data shown in FIG. 6 having a slot, or unit time information representing a time zone of unit time starting from the start time, supplying the generated tag registration data to the display control block 58.

Thus, on the basis of the tag registration count data for the target content supplied from the tag registration count data generating block 56, the display control block 58 displays the icon at a position in the icon display area 153 by a position on the horizontal axis representative of the start time of the unit time information contained in the tag registration count data (FIG. 6) and a position on the vertical axis representative of the tag registration count contained in the tag registration count data.

Namely, the display control block 58 selects, as display target tag registration count data, the tag registration count data with the time of the time zone represented by the horizontal axis of the icon display area 153 among the tag registration count data for the target content supplied from the tag registration count data generating block 56 being the start time and sets one of the selected display target tag registration count data to attention tag registration count data.

Further, the display control block 58 selects, as a display tag ID, one of the tag registration counts of all tag IDs of the attention tag registration count data, namely, for example, the tag ID of the highest value tag registration count (hereafter appropriately referred to as a maximum registration count) and gets the icon image data having the tag identified by the selected display tag ID from the storage block 32 via the tag read block 52.

Next, the display control block 58 displays the icon corresponding to the tag identified by the display tag Id at a position in the icon display area 153 identified by a position on horizontal axis representing the start time of unit time information contained in the attention tag registration count data and a position on the vertical axis representing the maximum registration count that is the tag registration count of the display tag ID, on the basis of the icon image data supplied from the tag read block 52.

The display control block 58 sequentially displays icons as described above with the display target tag registration count data as the attention tag registration count data.

It should be noted that, in the icon display area 153, every time the tag registration count increases by one, the icon is displayed at a position that is 1/2 upward of the length of the icon.

Also, in the above-mentioned case, on the tag ID of one tag registration count among the tag registration counts of all tag IDs of the attention tag registration count data is selected as the display tag ID and the icon corresponding to the tag identified by the selected display tag ID is displayed. It is also practicable to select, as the display tag ID, the tag ID of two or more tag registration counts among the tag registration counts of all tag IDs of the attention tag registration count data, for example, thereby displaying icons (namely, two or more icons) that are identified by these two or more display tag IDs.

Further, in the above-mentioned case, icons are displayed on the basis of the tag registration count data generated from the tag registration data stored in the storage block 32. It is also practicable to display icons on the basis of the average tag registration count data supplied from the tag management server 12 (FIG. 1) to the display apparatus 11 or another-user tag registration count data.

It is also practicable to select only one of the icon display based on the tag registration count data generated from the tag registration data stored in the storage block 32 (hereafter appropriately referred to as self-tag registration count data) and the icon display based on another-user tag registration count data (or average tag registration count data) supplied from the tag management server 12 (FIG. 1) or select both, namely, the displaying of both the icon based on the self-tag registration count data and the icon based on another-user tag registration count data is practicable.

For example, if icons based on self tag registration count data are displayed, the user can understand (or confirm) the user's own emotions for the target content and the specific evaluation of user's own for the target content.

If icons based on another-user tag registration count data are displayed, the user can understand (or confirm) another user's emotions for the target content and the specific evaluation of another user for the target content.

Further, if both the icons based on self tag registration count data and based on another-user tag registration count data are displayed, the user can understand a difference or a match between the emotions of the user and another user for the target content.

As described above, an icon representative of the tag registered for the target content is displayed at a position in the icon display area 153 identified by a position on the horizontal axis indicative of start time and a position on the vertical axis indicative of the tag registration count of a tag registered for the target content in a slot that is a time zone of a unit time from the start time, so that the user can intuitively understand the evaluation by another user for each slot that is a particular part of the target content, for example.

In the example shown in FIG. 9, the minimum unit of the scale of the time axis is one minute in accordance with the unit time information of tag registration count data. In accordance with the number of tags specified for registration in one minute that is the unit time, the vertical display position of the icon for each tag is determined. In addition, in accordance with the minimum unit of the scale of the time axis, the number of times tag registration is executed is limited to every one minute. For example, the number of times tag registration is executed is 20 per minute for one user. It should be noted that the minimum unit of the scale of the time axis is not limited to one minute; the minimum unit may be changed in accordance with the resolution of the display in the display block 35 or the unit time indicated by the unit time information of tag registration count data may be changed in match with the changed based on the resolution.

FIG. 10 is a flowchart indicative of the processing of tag registration in the display apparatus 11 of the tag registration system shown in FIG. 1 and the processing of adding up tag registration count in the tag management server 12.

When the operation input block 31 is operated so as to select the tag registration mode, for example, the display apparatus 11 starts the processing of tag registration for a particular piece of content.

In the tag registration mode, when the user operates the operation input block 31 so as to select a region and a channel in and on which the target content is being broadcast, then an operation signal corresponding to the operation done is supplied from the operation input block 31 to the selector block 51.

In step S11, in accordance with the operation signal supplied from the operation input block 31, the selector block 51 selects a region and a channel in and on which the target content is being broadcast and supplies the region information and channel information indicative of the selected region and channel to the tag registration data generating block 55 and the display control block 58, upon which the procedure goes to step S12.

In step S12, the display control block 58 displays, on the display block 35, a tag display window 131 (FIG. 9) that reflects the region information and channel information supplied from the selector block 51, upon which the procedure goes to step S13.

In step S13, the display control block 58 starts the moving of the pointer 154 along the time axis in the icon display area 153 of the tag display window 131, upon which the procedure goes to step S14.

In step S14, the tag read block 52 determines whether tag registration has been specified. Specifically, the tag read block 52 determines whether an operation signal corresponding to the operation of any of icon buttons 152 in the tag display window has been supplied from the operation input block 31.

If tag registration is found specified in step S14, then the procedure goes to step S15, on which the tag read block 52 reads the tag specified for registration from the storage block 32. In other words, in the tag display window 131, the tag read block 52 reads, from the storage block 32, the tag corresponding to the icon button operated by the user among the icon buttons 152.

Further, in step S15, the tag read block 52 supplies the tag ID of the tag read from the storage block 32 to the tag registration data generating block 55.

Also, the tag read block 52 supplies a command to the time information taking block 53 for obtaining the time at which the tag register was specified, upon which the procedure goes from step S15 to step S16.

In step 516, on the basis of the command supplied from the tag read block 52, the time information taking block 53 gets, from the clock block 54, time information indicative of the time at which the tag registration was specified and supplies the obtained time information to the tag registration data generating block 55, upon which the procedure goes to step S17.

In step S17, the tag registration data generating block 55 generates the tag registration data shown in FIG. 5 from the region information and channel information, the tag ID of the tag, and the time information supplied from the selector block 51, the tag read block 52, and the time information taking block 53, respectively, and the preset user ID and supplies the generated tag registration data to the storage block 32, upon which the procedure goes to step S18.

On the other hand, if the tag registration is found not specified in step S14, then the procedure goes to step S18 by skipping steps S15 through S17.

In step S18, the tag registration count data generating block 56 determines on the basis of the current time outputted from the clock block 54 whether a unit time has passed since the immediately preceding start time.

If the unit time is found not passed in step S18, then the procedure returns to step S14 to repeat the above-mentioned processes of steps S14 through S17.

On the other hand, if the unit time is found passed in step S18, then the procedure goes to step S19, in which the tag registration count data generating block 56 generates tag registration count data (self tag registration count data) by use of the tag registration data stored in the storage block 32 and supplies the generated tag registration count data to the storage block 32 for storage and to the communications control block 57 and the display control block 58, upon which the procedure goes to step S20.

In step S20, the transmission control block 71 makes the communications block 34 transmit the self tag registration count data supplied from the tag registration count data generating block 56.

On the other hand, in the tag management server 12, the reception control block 111 (FIG. 8) makes the communications block 99 (FIG. 7) receive the tag registration count data transmitted from each of the display apparatuses 11 and supplies the received tag registration count data to the tag registration count add-up block 112 (FIG. 8) in step S31, upon which the procedure goes to step S32.

In step S32, the tag registration count add-up block 112 adds up the tag registration count for each ID from the tag registration count data having the same region information and channel information and the unit time information among the tag registration count data received in step S31 and supplies the resultant all-user tag registration count data to the storage block 98 for storage and to the transmission control block 113, upon which the procedure goes to step S33.

In step S33, the transmission control block 113 obtains another-user tag registration count data on the basis of the all-user tag registration count data supplied from the tag registration count add-up block 112 and supplies the obtained another-user tag registration count data to the communications block 99 that transmits the supplied data to the display apparatus 11.

Next, the procedure returns from step S33 to step S31 to repeat the above-mentioned processing.

On the other hand, in the display apparatus 11, in step S21, the reception control block 72 makes the communications block 34 receive the another-user tag registration count data transmitted from the tag management server 12 to supply this data to the display control block 58, upon which the procedure goes to step S22.

In step S22, as shown with reference to FIG. 9, the display control block 58 displays, in the icon display area 153 of the tag display window 131, one or both of the icon based on the self tag registration count data supplied from the tag registration count data generating block 56 and the icon based on the another-user tag registration count data supplied from the reception control block 72, upon which the procedure returns to step S14 to repeat the above-mentioned processing until the tag registration mode is cleared.

It should be noted that, in step S22, the display control block 58 receives, from the tag read block 52, the icon image data and color data of the tag stored in the storage block 32, thereby displaying the icon on the basis of the supplied icon image data and color data.

It is also practicable, if the user specification for tag registration is found, to output sound and/or generate vibration on the basis of the sound data and/or the vibration pattern data corresponding to the tag specified for registration. Specifically, the tag read block 52 supplies the sound data of the tag specified for registration to the audio output control block 59 and the vibration pattern data of the tag specified for registration to the vibration control block 60, thereby making the audio output block 36 output sound and/or the vibration block 37 generate vibration.

As described above, while viewing a particular piece of content the user can select the icon button 152 in the tag display window 131 to specify the tag registration for that content in an intuitive and simple manner and understand, almost in real-time, the tag registered by another user who is viewing the same content.

Thus, in the display apparatus 11, tag registration count data associated with the number of tag registration data including the tag ID that is identification information for identifying a tag specified by the user for registration for a particular piece of content (or target content) among tags representing emotions and the time information indicative of a time at which the user specified tag registration and the displaying of an icon representing an emotion indicated by the tag identified by the tag ID onto a position that is defined by a position on the horizontal axis indicative of a predetermined time in the display area (the icon display area 153) indicated by the horizontal axis (the time axis) that is the first axis indicative of time and by a position on the vertical axis indicative of the number of tag registration data having the same tag ID among the tag registration data having time information indicative of a time included in a predetermined unit time including a predetermined time is controlled on the basis of the tag registration count data, so that the user can intuitively understand the evaluation by another user for a predetermined part in the particular piece of content, for example.

It should be noted that, in the description made above, in the icon display area 153, the horizontal axis is representative of time and the vertical axis is representative of the number of tag registration data; it is also practicable that the horizontal axis is representative of the number of tag registration data and the vertical axis is representative of time.

Further, in the description made above, after the passing of a unit time from the immediately preceding start time, self tag registration count data is generated from the tag registration data of a tag specified for registration inside that unit time and an icon based on the generated self tag registration count data is displayed. It is also practicable that, in the tag registration specified by the user of the display apparatus 11, a corresponding icon may be displayed every time the tag registration is specified regardless of the passing of a unit time. Namely, in the display control block 58, in the tag registration data generating block 55, every time the tag registration data is generated in accordance with the specification of tag registration, the display position of the icon corresponding to the tag identified by the tag ID of the tag registration data may be changed.

Consequently, the user of the display apparatus 11 can check the change of the display position of the icon corresponding to each registered tag in real-time.

Further, in the description made above, a particular piece of content for which a tag is registered is a currently broadcast television program. However, if a particular piece of content broadcast and recorded in the past is viewed, in the display apparatus 11, another-user tag registration count data in which that content is the target content is obtained from the tag management server 12 and an icon based on the another-user tag registration count data can be displayed.

Consequently, after checking the evaluation by another user of the recorded content, the user can start viewing that content. Namely, in accordance with the evaluation by another user, the user can determine whether to view the recorded content. Also, in the display apparatus 11, the time counted by the clock block 54 can be changed to the time at which the content was broadcast to transmit the self tag registration count data obtained by the specification by the user of a tag for registration to the tag management server 12, thereby allowing the user to newly register a tag for the recorded content in addition to the tags registered in the past, which gives the user a sense of viewing the recorded content in real-time.

In the description made above, the displaying is executed in accordance with the tag registration specify by unspecified users. However, it is also practicable to execute the displaying in accordance with the tag registration by the specification by only users who made user registration in advance.

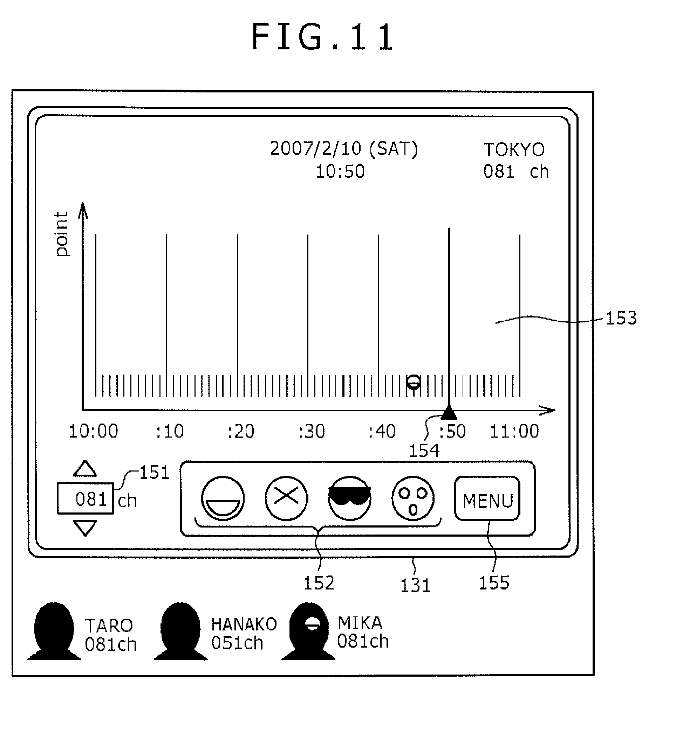

FIG. 11 shows an example of the display on the display block 35 in the tag registration processing to be executed when user registration was made.

As shown in FIG. 11, displayed below the tag display window 131 are images (representing people) who are logged in and specifying (or operating for specification) tag registration, among the users who have done user registration, the names of these users, and the channel information about particular pieces of content being viewed by these users.

According to the example shown in FIG. 11, the user of the display apparatus 11 indicated by "Taro" is viewing channel 81, the user of the display apparatus 11 indicated by "Hanako" is viewing channel 51, and the user of the display apparatus 11 indicated by "Mika" is viewing channel 81. It should be noted that the icon superimposed with user "Mika" is an icon corresponding to a tag specified for registration by the user "Mika" within one to two minutes in the past from the current time.

The above-mentioned configuration can be realized by that the reception control block 72 (FIG. 2) gets, via the tag management server 12, the tag registration data of a tag specified for registration by user-registered another user and the display control block 58 (FIG. 2) controls the displaying on the display block 35 (FIG. 2) on the basis of the tag registration data of this another user.

This configuration allows the users to understand which user has specified which tag for registration for the content of which channel,

Referring to FIG. 11, it is also practicable to use a face-expression changing avatar for the image representing a log-in user and change the facial expression of the avatar of the user in accordance with the tag specified by each user for registration, rather than superimposing the icon corresponding to the tag specified by the user for registration with the image of the user as described above. Besides, at this time, sound representing laughter and crying may be outputted in accordance with the facial expressions of the avatar.

Thus, displaying the information indicative of the states of the user-registered users along with the tag display window 131 allows each user to feel that the user is viewing content with people close to the user.

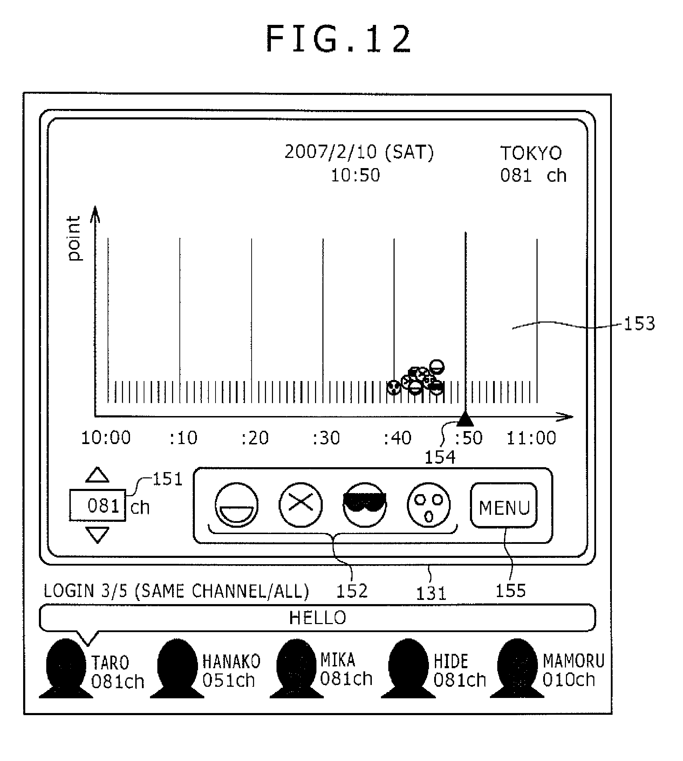

Further, as shown in FIG. 12, it is practicable to make a configuration in which user-registers users can chat with each other. This configuration can be realized by adding chat server capabilities to the tag management server 12 (FIG. 1).

According to the example shown in FIG. 12, five users are logged in, user "Taro", user "Hanako", user "Mika", user "Hide", and user "Mamoru", among whom chat can be executed.

As shown in FIG. 12, two users "Mika" and "Hide" are viewing the content on channel 81 that is viewed by user "Taro" of the display apparatus 11. Namely, of the five log-in users, three users are viewing the content on channel 81. At this moment, the display control block 58 displays "Login 3/5 (same channel/all)" indicative of the number of log-in users just below the tag display window 131 on the basis of the log-in information in the tag management server 12 as a chat server, for example.

As described above, displaying the number of users who are viewing the content on the same channel allows the user to easily understand the reactions (specifications for tag registration) by how many users of all log-in users when the icon has been displayed by the tag registration on the tag display window 131.

It is also practicable to display some information (for example, "Tuned to another user!") for those user-registered users who have specified tag registration for the same content at almost the same time.

For example, this configuration can be realized by that, every time tag registration data (FIG. 5) is generated by the tag registration data generating block 55 (FIG. 2), each of the display apparatuses 11 operated by the user-registered users transmits the generated tag registration data to the tag management server 12 and the tag management server 12 transmits a request for the displaying of information "Tuned to another user!" to the display apparatus 11 to be operated by the user identified by the user ID of in the tag registration data having the same region information and channel information and tag ID among the tag registration data received from the display apparatus 11.

Whether users have been tuned to each other is determined as described below.

Namely, for example, in the tag management server 12, for the tag registration data (FIG. 5) having the same tag ID supplied from each display apparatus 11, a ratio of the tag registration data having time information indicative of a time included in a relatively short time range (1 to 2 seconds for example) that is regarded to be almost the same time among the tag registration data having time information indicative of a time included in a predetermined time interval, such as 10 seconds is used as a tune ratio. If the tune ratio is over a predetermined threshold, then it is regarded that the users identified by the user ID of the tag registration data having time information indicative of a time included in that relatively short time are tuned to each other.

Thus, obtaining a tune ratio for the tags specified for registration by the users viewing the same content allow to provide matching between the users.

If matching is provided between unspecified users rather than only user-registered users, these unspecified users can get a chance of starting new communication.

For example, it is practicable to include user nationality, gender and the like as well as user name into the user ID in tag registration data, thereby allowing the users who have specified tag registration at the same scene of the same content to confirm the information about each other.

It is also practicable to change the displaying of the background of the icon button 152 and the icon display area 153 in accordance with the type (or genre) of content in the tag display window 131 (FIG. 9) to be displayed on the display block 35 of the display apparatus 11.

Specifically, the displaying of the background of the icon button 152 or the icon display area 153 can be changed by that, on the basis of information indicative of a future date at which content of a predetermined genre (a sport live program, such as baseball or football, or a comedy show, for example) will be broadcast, the display apparatus 11 downloads a tag corresponding to that content genre and background image data for the icon display area 153 from the tag management server 12 in advance. It should be noted that the display apparatus 11 may download these tag and background image data when the user views that content, namely, the tag registration mode is selected on the display apparatus 11.

Consequently, the user can specify tag registration in accordance with the atmosphere of the content to be viewed.

If the display apparatus 11 is a mobile phone, the channel switching capability of switching channels of television programs displayed on a predetermined television set by infrared radiation may be interlocked with the processing of selecting a channel on which the target content (a television program) of tag registration is being broadcast in the tag display window 131 by transmitting channel information indicative of a channel selected by the selector block 51 (FIG. 2) by means of infrared radiation via the communications block 34, for example.

Consequently, by operating the display apparatus 11 as the remote controller of a television set, the user can change of channels of content being viewed and, at the same time, display the tag display window 131 (FIG. 9) corresponding to the selected channel onto the display block 35. Conversely, while checking the situation of icons (or tags registered on another display apparatus 11) displayed in the tag display window 131 corresponding to the selected channel, the user can change the channel of the television set to a channel on which a desired piece of content is broadcast.

Further, for example, if the registration of a particular tag (a tag identified by tag ID 001, for example) is specified for a particular piece of content being broadcast on a predetermined channel more often than a predetermined number of times within a predetermined time range, then the channel of the television set may automatically changed to that channel by the channel switching capability.

Further, by executing user registration, the display apparatus 11 may, in accordance with an operation of channel switching done by another user-registered user, display the tag display window 131 corresponding to that channel and, at the same time, change the channel of the television set to that channel.

Thus, interlocking the channel switching of content to be viewed with the channel selection of the tag display window 131 allows the user to expand the types of content to be viewed.

In the description made so far, the embodiments of the present invention are those in which the present invention is applied to display apparatuses that are television sets, personal computers, or mobile phones. However, the present invention is also applicable to information processing apparatuses having a display section, such as PDAs (Personal Digital Assistants) and digital cameras, for example.

The above-mentioned sequence of processing operations may be executed by software as well as hardware. When the above-mentioned sequence of processing operations is executed by software, the programs constituting the software are installed in the storage block 32 from the removable media 39 via the control block 33.

It should be noted herein that the steps for describing each program recorded in removable media 39 include the processing operations which are executed concurrently or discretely as well as the processing operations which are sequentially executed in a time-dependent manner.

While preferred embodiments of the present invention have been described using specific terms, such description is for illustrative purpose, and it is to be understood that changes and variations may be made without departing from the scope of the following claims.

## Claims

1. An information processing apparatus comprising:
a taking means (56, 72) for taking registration count information associated with the number of pieces of registration information including identification information for identifying a tag included in the tag specified by a user for registration for a particular piece of content among tags representative of emotions and time information indicative of a time at which said user specified tag registration; and
a display controlling means (58) for controlling, in a display area (153) defined by a first axis indicative of a time and a second axis indicative of number of pieces of registration information, displaying, on the basis of said registration count information, an icon representative of an emotion indicated by a tag identified by said identification information onto a position identified by a position along said first axis indicative of a predetermined time and a position along said second axis indicative of said number of pieces of registration information having substantially the same identification information among said registration information having said time information indicative of a time included in a predetermined unit time including said predetermined time.

2. The information processing apparatus according to claim 1, further comprising:
a generating means (55) for generating said registration information as specified by said user for tag registration;
wherein said taking means (56, 72) generates said registration count information by use of said registration information generated by said generating means (55).

3. The information processing apparatus according to claim 1, wherein said taking means (56, 72) takes, from another apparatus, said registration count information generated as specified by a user of said another apparatus for tag registration.

4. The information processing apparatus according to claim 3, wherein said taking means (56, 72) takes registration count information associated with a count obtained, added up for each of said identification information, by said number of pieces of registration information generated in accordance with tag specification by a plurality of other users.

5. The information processing apparatus according to claim 1, wherein said registration information further includes region information indicative of a region in which a particular piece of content for which tag registration is made and channel information indicative of a channel on which said particular piece of content is being broadcast; and
said display controlling means (58) controls, on the basis of said registration count information, displaying of said icon representative of an emotion expressed by a tag identifying by said identification information onto a position defined by a position along said first axis indicative of said predetermined time and a position along said second axis indicative of the number of pieces of said registration information having the same region information, the same channel information, and said identification information among said registration information having time information indicative of a time included in a predetermined unit time including said predetermined time.

6. The information processing apparatus according to claim 1, wherein said particular piece of content for which tag registration is made is a television program.

7. An information processing method comprising the steps of:
taking registration count information associated with the number of pieces of registration information including identification information for identifying a tag included in the tag specified by a user for registration for a particular piece of content among tags representative of emotions and time information indicative of a time at which said user specified tag registration; and
controlling, in a display area defined by a first axis indicative of a time and a second axis indicative of said number of pieces of registration information, displaying, on the basis of said registration count information, an icon representative of an emotion indicated by a tag identified by said identification information onto a position identified by a position along said first axis indicative of a predetermined time and a position along said second axis indicative of said number of pieces of registration information having substantially the same identification information among said registration information having said time information indicative of a time included in a predetermined unit time including said predetermined time.

8. A program for making a computer execute, as an information processing apparatus, comprising the steps of:
taking registration count information associated with the number of pieces of registration information including identification information for identifying a tag included in the tag specified by a user for registration for a particular piece of content among tags representative of emotions and time information indicative of a time at which said user specified tag registration; and
controlling, in a display area defined by a first axis indicative of a time and a second axis indicative of said number of pieces of registration information, displaying, on the basis of said registration count information, an icon representative of an emotion indicated by a tag identified by said identification information onto a position identified by a position along said first axis indicative of a predetermined time and a position along said second axis indicative of said number of pieces of registration information having substantially same said identification information among said registration information having said time information indicative of a time included in a predetermined unit time including said predetermined time.
